# EUROPÄISCHE PATENTSCHRIFT

(11) **EP 1 645 756 B1**
(45) Veröffentlichungstag und Bekanntmachung des Hinweises auf die Patenterteilung: **21.02.2007**
(21) Anmeldenummer: 05015499.6
(22) Anmeldetag: 16.07.2005
(51) Int. Cl.: F16B 7/18

(54) **Anbau- und Verbindungselement für ein System zum Aufbau von Vorrichtungen zum Aufspannen von Werkstücken**
Attaching and connecting element for a system for the setting up of devices to clamp workpieces
Élément d'attachement et de fixation pour un système pour l'établissement des dispositifs pour maintenir des objets

(30) Priorität: 06.10.2004 DE 202004015575 U
(43) Veröffentlichungstag der Anmeldung: 12.04.2006
(73) Patentinhaber: Horst Witte Entwicklungs- und Vertriebs KG, 21369 Nahrendorf (DE)
(72) Erfinder: Witte, Horst, 21369 Nahrendorf (DE)
(74) Vertreter: Fleck, Thomas

(56) Entgegenhaltungen:
- DE-A1- 10 057 577
- DE-U1- 29 722 124
- US-A- 5 746 535

## Beschreibung

Die Erfindung betrifft ein Anbau- und Verbindungselement nach dem Oberbegriff des Anspruches 1.

Anbau- und Verbindungselemente für System zum Aufbau von Vorrichtungen zum Aufspannen von Werkstücken sind in der unterschiedlichsten Ausgestaltung bekannt. Diese weisen Anbaustücke oder sonstige Teile auf, an denen Werkstückaufnahmen oder weitere Profile befestigt werden können.

Gegenstand eines älteren Vorschlages nach der EP-Anmeldung 04 016 159.8 ist ein System zum Aufbau von Vorrichtungen zum Aufspannen von Werkstücken, das durch ein T-Nutenprofil gebildet ist, in dem auf der Längsachse der T-Nuten in einem bestimmten Rastermaß beabstandete senkrechte Bohrungen vorgesehen sind, in die bei diesem älteren Vorschlag Nutensteine einsteckbar sind, die einen zylindrischen Abschnitt aufweisen, der in die im Rastermaß beabstandeten senkrechten Bohrungen passt. Diese Nutensteine, die in dem vorgegebenen Rastermaß angeordnet sind, dienen der Befestigung weiterer Elemente und Anbauteile.

Der Erfindung liegt nun die Aufgabe zugrunde, ein Anbau- und Verbindungselement für das ältere System zu schaffen, das in besonders vorteilhafter und reproduzierbarer Weise den Anbau und die Verbindung weiterer Profile oder Werkstückaufnahmen erlaubt.

Diese Aufgabe wird grundsätzlich durch das Kennzeichen des Anspruches 1 gelöst.

Das erfindungsgemäße Anbau- und Verbindungselement ist zweiteilig ausgebildet. Es besteht aus dem Haltestück, das mit Hilfe der angewachsenen Nutensteine in die T-Nuten des T-Nutenprofils einsteckbar und mit den Nutensteinen in diesen verschiebbar ist, so dass es in Einsteckrichtung formschlüssig gehalten wird. Auf dieses Haltestück wird dann das andere Teil, die Kupplungsplatte aufgesetzt, wobei die Zentrierzapfen für eine genaue Positionierung sorgen und zwar sowohl zu dem Haltestück durch Eingriff in die Durchgangseinschnitte und/oder -öffnungen und durch Einrasten in den senkrechten Bohrungen. Die Nutensteine bilden mit ihren Hinterschneidungen nach dem Verschieben des Haltestückes für eine formschlüssige Sicherung gegen Herausziehen. Die Zentrierzapfen sorgen für eine genaue Positionierung der Kupplungsplatte im Verhältnis zu dem Haltestück und insbesondere zu dem T-Nutenprofil. Die Aussparung an der Unterseite der Kupplungsplatte nimmt das Haltestück auf, so dass die Kupplungsplatte PLAN auf dem T-Nutenprofil aufliegt. Befestigungsschrauben gehen durch die Kupplungsplatte hindurch und werden von Gewindebohrungen auf der Mittelachse der Nutensteine aufgenommen. Auf diese Weise kann die entsprechend positionierte Kupplungsplatte festgesetzt werden.

Je nachdem, welche Art von Anbau- und Verbindungselement gewünscht wird, d.h. welche Anbau- oder Verbindungsaufgabe gelöst werden soll, und je nach Ausgestaltung der T-Nutenprofile ist das Haltestück unterschiedlich gestaltet. Es sind immer mindestens zwei Nutensteine und zwei Zentrierzapfen vorgesehen. In vorteilhafterweise können die Nutensteine auch in Form eines gleichmäßigen Rechtecks angeordnet sein, und so für eine entsprechend sichere und nuten-übergreifende Befestigung zu sorgen. Die Kupplungsplatte ist dann entsprechend gestaltet.

Das Anbau- und Verbindungselement dient nicht nur der Verbindung um Aufbauelemente, die mehr oder weniger quaderförmig sind, untereinander zu verbinden, sondern diese Anbau-und Verbindungselemente sind auch geeignet um eine Verbindung mit Grundplatten oder Maschinentischen herzustellen, die entsprechende T-Nuten aufweisen.

Vorteilhafte Ausgestaltungen sind Gegenstand der Ansprüche 2 bis 5.

Im folgenden wird die Erfindung unter Hinweis auf die Zeichnung anhand verschiedener Ausführungsbeispiele näher erläutert.

### Es zeigt:

- Fig. 1: eine auseinander gezogene perspektivische Ansicht einer Ausführungsform eines Anbau- und Verbindungselementes nach der Erfindung vor dem Zusammenbau mit einem T-Nutenprofil;
- Fig. 2: eine der Fig. 1 entsprechende perspektivische Ansicht, jedoch nach der ersten Stufe des Zusammenbaus, d.h. nach dem Einsetzen des Haltestückes;
- Fig. 3: eine der Fig. 2 entsprechende perspektivische Ansicht, jedoch nach dem Verschieben des Haltestückes in Längsrichtung der T-Nuten zur formschlüssigen Festlegung des Haltestückes;
- Fig. 4: eine den Figuren 1 bis 3 entsprechende perspektivische Ansicht, jedoch von unten vor dem Aufsetzen der Kupplungsplatte;
- Fig. 5: eine den Figuren 1 bis 4 entsprechende perspektivische Ansicht nach dem Aufsetzen der Kupplungsplatte;

- Fig. 6: eine der Fig. 5 entsprechende perspektivische Ansicht nach dem Festziehen der Schrauben zum Festsetzen der Kupplungsplatte;
- Fig. 7: eine der Fig. 1 entsprechende auseinander gezogene perspektivische Ansicht einer anderen Ausführungsform für Haltestück und Kupplungsplatte;
- Fig. 8: eine der Fig. 1 entsprechende auseinander gezogene perspektivische Ansicht einer weiteren Ausführungsform;
- Fig. 9: eine der Fig. 1 entsprechende perspektivische Ansicht, jedoch zweier nebeneinander liegender T-Nutenprofile, verbunden mit Hilfe eines entsprechend gestalteten Anbau- und Verbindungselementes;
- Fig. 10: eine der Fig. 4 entsprechende Ansicht, jedoch der Ausführungsform nach Fig. 9;
- Fig. 11: eine der Fig. 4 entsprechende perspektivische Ansicht, jedoch der Ausführungsform nach Fig. 8; und
- Fig. 12: eine perspektivische Ansicht einer Ausführungsform zum Aufbau eines Hohlprofiles aus mehreren rechteckigen T-Nutenprofilen.

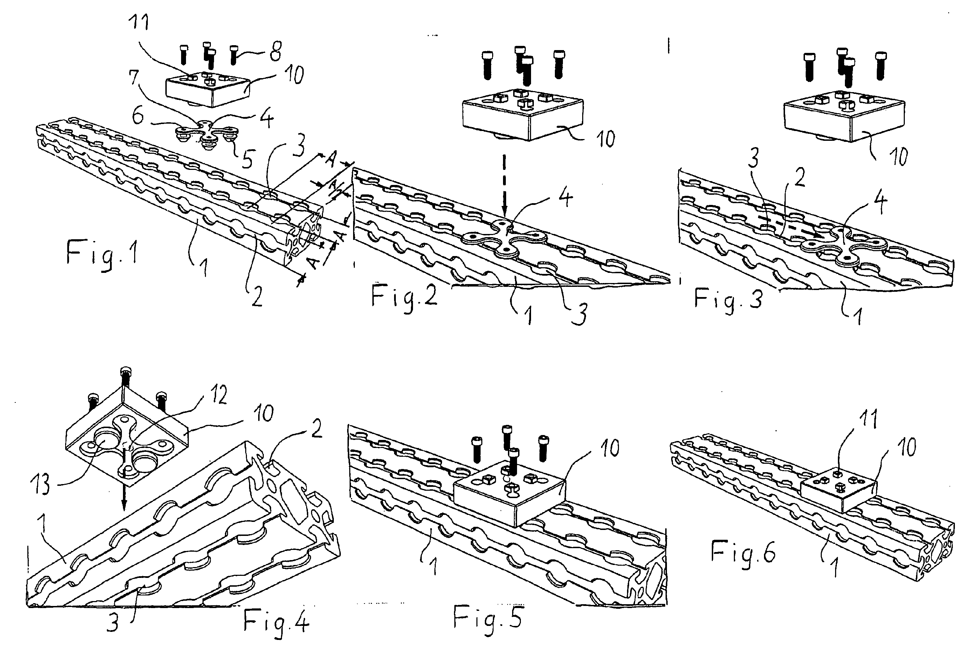

In den Figuren 1 bis 6 ist ein T-Nutenprofil 1 dargestellt, dass so ausgebaut ist, wie dasjenige in dem beschriebenen älteren Vorschlag. Dieses T-Nutenprofil 1 weist parallele T-Nuten 2 auf, die in einem Rastermaß A beabstandet sind. In diesen T-Nuten befinden sich senkrechte Bohrungen 3, die vorzugsweise als Passbohrungen ausgebildet sind und ebenfalls im Rastermaß A untereinander beabstandet sind. Zum Ende des T-Nutenprofiles weisen die Befestigungsbohrungen 3 einen Abstand im halben Rastermaß A/2 auf. Das Profil weist eine Breite von 2A und eine Höhe von A auf, so dass es entsprechend mit anderen Profilen unter Einhaltung des Rastermaßes oder eines vielfachen davon zusammengebaut werden kann.

Das Anbau- und Verbindungselement besteht aus zwei Teilen, nämlich einem Haltestück 4 und einer Kupplungsplatte 10.

Das Haltestück 4 weist an seiner Unterseite bei der Ausführungsform nach den Figuren 1 bis 6 vier Nutensteine 5 auf, die in dem vorgegebenen Rastermaß beabstandet sind und in die senkrechten Bohrungen 3 eingesteckt werden können. Die Hinterschneidungen, d.h. die Abschnitte größeren Durchmessers an der Unterseite der Nutensteine 5 können in den T-Nuten verschoben werden, so dass die Haltestücke dann gegen Herausziehen gesichert sind. Dieser Vorgang ist in den Fig. 2 (Einstecken) und Fig. 3 (Verschieben) dargestellt. Die Halteplatte ist sternförmig ausgebildet, d.h. sie weist Durchgangseinschnitte 7 auf, die ungefähr halbkreisförmig ausgebildet sind. Gewindebohrungen 6 dienen der Aufnahme von Befestigungsschrauben 8.

Die Kupplungsplatte 10 ist an ihrer Unterseite mit einer Aussparung 12 versehen, die durch die Form des Haltestückes 4 vorgegeben ist und dieses aufnimmt, wie es sich insbesondere beim Betrachten der Fig. 4 ergibt. Weiterhin sind zwei Zentrierzapfen 13 vorgesehen, die im Rastermaß beabstandet sind und einen Durchmesser aufweisen, der demjenigen der Befestigungsbohrungen entspricht, so dass diese in die Befestigungsbohrungen passen. Die Kupplungsplatte 10 wird dann auf das eingesteckte und verschobene Haltestück aufgesetzt, wobei das Haltestück in der Aussparung 12 verschwindet, und die Zentrierzapfen 13 durch die Durchgangseinschnitte 7 hindurchgeführt und in die ausgewählten senkrechten Bohrungen 3 eingesteckt werden. Die endgültige Fixierung und Befestigung erfolgt dann mit Hilfe der Befestigungsschrauben 8, die in die Gewindebohrungen 6 eingeschraubt werden. Das Anbau- und Verbindungselement nimmt dann eine genaue durch das Rastermaß festelegte Position ein. Aufnahmestücke 11 dienen der Anordnung weiterer Profile oder der Befestigung von Werkstückaufnahmen.

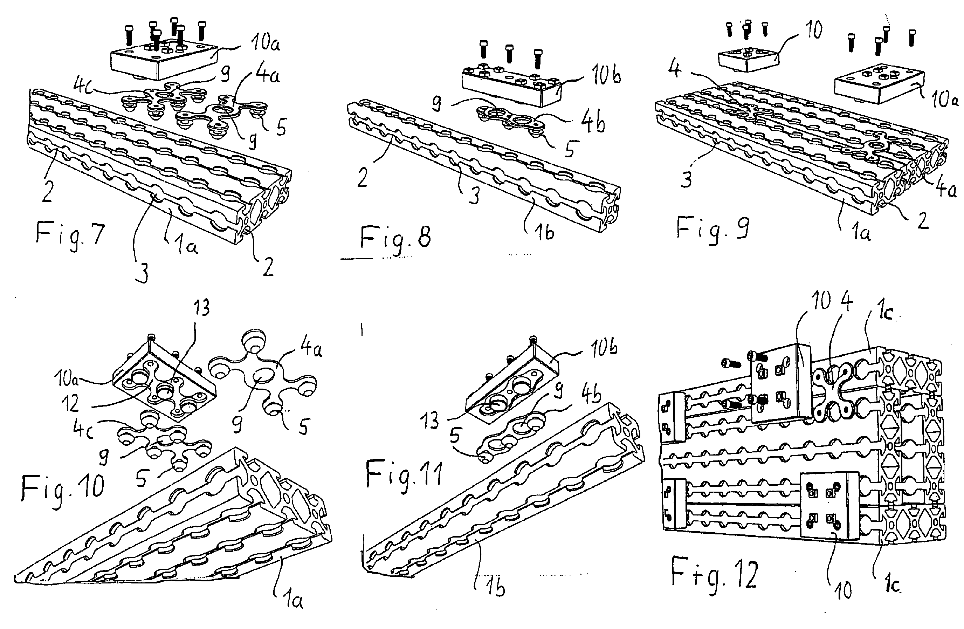

In den Figuren 7 und 10 ist eine andere Ausführungsform eines Haltestückes 4a bzw. 4c in Verbindung mit einer entsprechend anders gestalteten Verbindungsplatte 10a dargestellt. Die Haltestücke 4a und 4c weisen vier (Ausführungsform 4a) bzw. 6 (Ausführungsform 4c) Nutensteine auf, die entsprechend beabstandet sind, so dass sie von den Bohrungen 3 des T-Nutenprofils 1a aufgenommen werden und in den entsprechenden T-Nuten seitlich verschiebbar sind. Eine entsprechend gestaltete Kupplungsplatte 10a mit einer Aussparung 12 an der Unterseite und mit drei Zentrierzapfen 13 wird dann wie vorstehend beschrieben auf das Haltestück 4a oder 4c aufgesetzt und mit Hilfe der Befestigungsschrauben festgesetzt. Anstelle der Durchgangseinschnitte 7 ist in der Mitte eine Durchgangsöffnung 9 vorgesehen.

Die Ausführungsform nach den Figuren 8 und 11 zeigt ein einfaches T-Nutenprofil mit quadratischem Querschnitt, an dem ein länglich gestaltetes Anbau- und Verbindungselement befestigt werden kann. Das Haltestück 4b weist drei Nutensteine 5 und zwei Durchgangsöffnungen 9 auf. Entsprechend ist die Kupplungsplatte 10b mit zwei Zentrierzapfen 13 ausgerüstet.

Fig. 9 zeigt eine Möglichkeit, wie zwei Nutenprofile 1a zu einer breiteren Platte mit Hilfe eines Anbau- und Verbindungselementes 10 bzw. 10a zusammengebaut werden kann.

Noch eine andere Möglichkeit zeigt die Fig. 12. Hier wird ein hohles Rechteckprofil aus T-Nutenprofilen 1c mit Hilfe von Haltestücken 4 und Kupplungsplatten 10 zusammengebaut. Auch diese Kupplungsplatten 10 dienen wiederum der Befestigung weiterer Teile.

In der Ausführungsform nach den Figuren 1 bis 3 sind vier Befestigungsschrauben 8 und entsprechende Durchgangslöcher sowie Gewindebohrungen 6 dargestellt. Es ist grundsätzlich auch denkbar, lediglich eine mittige Befestigungsschraube zu verwenden, die dann durch eine zentrale Öffnung in der Kupplungsplatte hindurch geht und in einem Gewinde in der Mitte des Haltestückes 4 endet. Diese Ausführungsform mit einer Schraube ist im wesentlichen geeignet, um das Anbau- und Verbindungselement zum Aufbau weiterer Teile an einem einzelnen Teil zu befestigen. Wenn zwei Teile miteinander verbunden werden sollen ist die Ausführungsform mit mindestens zwei Befestigungsschrauben von Vorteil.

Es ist ohne weiteres erkennbar, dass das Anbau- und Verbindungselement in der unterschiedlichsten Weise ausgestaltet sein kann. Das Haltestück weist die Nutensteine auf, die in die Bohrungen 3 eingeführt werden und nach dem Verschieben für die entsprechende Sicherung gegen Herausziehen sorgen. Die Zentrierzapfen sorgen für eine genaue Anordnung im Rastermaß. Die Befestigungsschrauben dienen der endgültigen Fixierung und Festlegung.

### Bezugszeichenliste

- 1: T-Nutenprofil
- 2: T-Nut
- 3: Senkrechte Bohrung
- 4: Haltestück
- 5: Nutenstein
- 6: Gewindebohrung
- 7: Durchgangseinschnitt
- 8: Schraube
- 9: Durchgangsöffnung
- 10: Kupplungsplatte
- 11: Anbaustück
- 12: Aussparung
- 13: Zentrierzapfen

## Patentansprüche

1. Anbau- und Verbindungselement für ein System zum Aufbau von Vorrichtungen zum Aufspannen von Werkstücken mit einem T-Nutenprofil, in dem auf der Längsachse der T-Nuten in einem bestimmten Rastermaß beabstandete senkrechte Bohrungen vorgesehen sind, in die Nutensteine eingesteckt sind, **dadurch gekennzeichnet, dass** mindestens zwei Nutensteine (5) im Rastermaß (A) beabstandet an der Unterseite eines Haltestückes (4) ausgebildet sind, dass im Rastermaß beabstandete Durchgangseinschnitte (7) und/oder -öffnungen (9) aufweist, und
auf das eine Kupplungsplatte (10) aufgesetzt ist, die auf ihrer Unterseite eine Aussparung (12) zur Aufnahme des Haltestückes (10) und mindestens zwei im Rastermaß (A) beabstandete Zentrierzapfen (13) aufweist, die durch die Durchgangseinschnitte und/oder -öffnungen (7,9) in die senkrechten Bohrungen (3) eingesteckt sind.

2. Anbau- und Verbindungselement nach Anspruch 1, **dadurch gekennzeichnet, dass** die Zentrierzapfen (13) mit einem Passsitz in die als Passbohrungen ausgebildeten senkrechten Bohrungen (3) an den T-Nuten (2) passen.

3. Anbau- und Verbindungselement nach Anspruch 1 oder 2, **dadurch gekennzeichnet, dass** T-Nuten (3) untereinander im Rastermaß (A), einem Teil oder einem Vielfachen des Rastermaßes beabstandet sind, und
dass die Zentrierzapfen (13) entsprechend beabstandet sind.

4. Anbau- und Verbindungselement nach einem oder mehreren der Ansprüche 1 bis 3, **dadurch gekennzeichnet, dass** mindestens vier im Rastermaß (A), einem Teil oder einem Vielfachen beabstandeten Nutensteine (5) ein gleichmäßiges Rechteck beschreiben.

5. Anbau- und Verbindungselement nach einem oder mehreren der vorstehenden Ansprüche, **dadurch gekennzeichnet, dass** auf der Oberseite Anbaustücke (11) zur Befestigung weiterer Elemente vorgesehen sind.

## Claims

1. Attachment and connecting element for a system for the construction of devices for clamping workpieces having a T-slot profile, in which vertical holes spaced with a specific pitch are provided on the longitudinal axis of the T-slots and sliding blocks are inserted into the same, **characterized in that** at least two sliding blocks (A) are constructed on the underside of a retaining part (4) spaced by the pitch (A) and through grooves (7) and/or openings (9) are spaced by the pitch and a coupling plate (10) is placed upon the same having on its underside a recess (12) for receiving the retaining part (5) and at least two centring pins (13) spaced by the pitch (A) and which are inserted through the through grooves and/or openings (7, 9) into the vertical holes (3).

2. Attachment and connecting element according to claim 1, **characterized in that** the centring pins (13) fit with a press fit into the vertical holes (3) on T-slots (2) constructed as locating holes.

3. Attachment and connecting element according to claim 1 or 2, **characterized in that** the T-slots (3) are spaced from one another by the pitch (A), or part or a multiple of the pitch and that the centring pins (13) are correspondingly spaced.

4. Attachment and connecting element according to one or more of the claims 1 to 3, **characterized in that** at least four sliding blocks (5) spaced by the pitch (A), or part or a multiple thereof describe a uniform rectangle.

5. Attachment and connecting element according to one or more of the preceding claims, **characterized in that** attachment pieces (11) for fixing further elements are provided on the top surface.

## Revendications

1. Elément de rattachement et de liaison pour un système de rattachement de dispositifs d'ablocage de pièces à usiner, comprenant un profilé rainuré en T dans lequel, sur l'axe longitudinal des rainures en T, sont prévus des perçages perpendiculaires qui sont espacés selon une cote modulaire déterminée, et dans lesquels des protubérances rainurées sont emboîtées, **caractérisé par le fait qu'**au moins deux protubérances rainurées (5), espacées de la cote modulaire (A), sont façonnées à la face inférieure d'une pièce de retenue (4) munie de dépouilles (7) et/ou d'orifices (9) de passage espacés de la cote modulaire, et sur laquelle est mise en place une platine d'accouplement (10) comportant, sur sa face inférieure, un évidement (12) conçu pour recevoir la pièce de retenue (10) et au moins deux tenons de centrage (13) espacés de la cote modulaire (A) et emboîtés dans les perçages perpendiculaires (3), à travers les dépouilles et/ou les orifices de passage (7, 9).

2. Elément de rattachement et de liaison selon la revendication 1, **caractérisé par le fait que** les tenons de centrage (13) s'ajustent, avec assise serrée, dans les perçages perpendiculaires (3) pratiqués sur les rainures (2) en T et réalisés sous la forme de perçages d'ajustement.

3. Elément de rattachement et de liaison selon la revendication 1 ou 2, **caractérisé par le fait que** des rainures (3) en T sont mutuellement espacées de la cote modulaire (A), d'une partie ou d'un multiple de ladite cote modulaire ; et
**par le fait que** les tenons de centrage (13) présentent un espacement correspondant.

4. Elément de rattachement et de liaison selon l'une ou plusieurs des revendications 1 à 3, **caractérisé par le fait qu'**au moins quatre protubérances rainurées (5), espacées de la cote modulaire (A), d'une partie ou d'un multiple de ladite cote, décrivent un rectangle régulier.

5. Elément de rattachement et de liaison selon l'une ou plusieurs des revendications précédentes, **caractérisé par le fait que** des pièces de rattachement (11) sont prévues, sur la face supérieure, pour la fixation d'éléments supplémentaires.
